# EUROPÄISCHE PATENTSCHRIFT

(11) **EP 2 049 001 B1**
(45) Veröffentlichungstag und Bekanntmachung des Hinweises auf die Patenterteilung: **13.11.2013**
(21) Anmeldenummer: 06776506.5
(22) Anmeldetag: 29.07.2006
(51) Int. Cl.: A47L 9/20

(54) **STAUBSAUGER MIT FILTERSELBSTREINIGUNGSVORRICHTUNG**
VACUUM CLEANER WITH SELF-CLEANING FILTER DEVICE
ASPIRATEUR AVEC DISPOSITIF D'AUTONETTOYAGE DU FILTRE

(43) Veröffentlichungstag der Anmeldung: 22.04.2009
(73) Patentinhaber: Alfred Kärcher GmbH & Co. KG, 71364 Winnenden (DE)
(72) Erfinder: STEWEN, Christian, 71672 Marbach (DE); ECKSTEIN, Daniel, 71364 Winnenden-Baach (DE); LANGEN, Thorsten, 70190 Stuttgart (DE); BENZLER, Gottfried, 71737 Kirchberg a.d. Murr (DE)
(74) Vertreter: Karrais, Martin
(86) Internationale Anmeldenummer: PCT/EP2006/007541
(87) Internationale Veröffentlichungsnummer: WO 2008/014794

(56) Entgegenhaltungen:
- EP-A- 1 166 705
- WO-A-97/19630
- WO-A-2004/100752
- DE-U1- 29 823 411

## Beschreibung

Die Erfindung betrifft einen Staubsauger mit einem Schmutzsammelbehälter, der einen Saugeinlass aufweist und über mindestens ein Filter und zumindest eine Absaugleitung mit mindestens einem Saugaggregat in Strömungsverbindung steht, und mit mindestens einem stromabwärts des mindestens einen Filters in die Absaugleitung einmündenden Fremdlufteinlass, der mittels zumindest eines Schließventils verschließbar ist, wobei das mindestens eine Schließventil einen Ventilkörper aufweist, der zwischen einer Schließstellung, in der er an einem Ventilsitz anliegt, und einer Offenstellung, in der er zum Ventilsitz beabstandet ist, hin- und herbewegbar ist, wobei er permanent von einer Schließfeder mit einer Schließkraft und in der Schließstellung zusätzlich von einer Magnethalterung mit einer magnetischen Haltekraft beaufschlagt ist.

Mittels derartiger Staubsauger kann Schmutz und vorzugsweise auch Flüssigkeit von einer Fläche abgesaugt werden, indem man den Schmutzsammelbehälter mit Hilfe von mindestens einem Saugaggregat mit Unterdruck beaufschlagt, so dass sich eine Saugströmung ausbildet und Schmutz und Flüssigkeit in den Schmutzsammelbehälter eingesaugt werden können. Die Staubsauger weisen ein oder mehrere Filter auf, die im Strömungsweg zwischen dem Schmutzsammelbehälter und dem mindestens einen Saugaggregat angeordnet sind und der Abscheidung von Feststoffen aus der Saugströmung dienen. Während des Saugbetriebes lagern sich zunehmend Schmutzteilchen an der dem Schmutzsammelbehälter zugewandten Seite des mindestens einen Filters an, so dass das bzw. die Filter nach einiger Zeit abgereinigt werden müssen. Zur Abreinigung kann die dem Schmutzsammelbehälter abgewandte Seite der Filter mit Fremdluft beaufschlagt werden, indem mindestens ein Schließventil geöffnet wird, so dass vom Fremdlufteinlass Fremdluft in die mindestens eine Absaugleitung einströmen und die dem Schmutzsammelbehälter abgewandte Seite des mindestens einen Filters beaufschlagen kann.

In der Gebrauchsmusterschrift DE 298 23 411 U1 wird zur Abreinigung eines Filters vorgeschlagen, einen Saugschlauch, der an den Saugeinlass des Schmutzsammelbehälters angeschlossen ist, kurzzeitig zu verschließen, so dass sich aufgrund der Wirkung des Saugaggregates im Schmutzsammelbehälter ein starker Unterdruck ausbildet, und anschließend soll ein Schließventil kurzzeitig geöffnet werden. Das Filter wird dann in Gegenstromrichtung, d. h. entgegen der Richtung der während des normalen Saugbetriebes vorherrschenden Saugströmung, von der Fremdluft durchströmt, so dass sich am Filter anhaftende Schmutzteilchen ablösen.

In der DE 199 49 095 A1 wird der Einsatz von zwei Filtern vorgeschlagen, die wahlweise abgereinigt werden, wobei während der Abreinigung des einen Filters der Saugbetrieb über das andere Filter in eingeschränktem Umfange aufrechterhalten werden kann.

Aufgabe der vorliegenden Erfindung ist es, einen Staubsauger der gattungsgemäßen Art derart weiterzubilden, dass er eine besonders wirkungsvoll Abreinigung des mindestens einen Filters ermöglicht.

Diese Aufgabe wird bei einem Staubsauger der eingangs genannten Art erfindungsgemäß dadurch gelöst, dass die Magnethalterung einen Elektromagneten umfasst mit einem Magnetkern und einer Spule, die zum Schießen des Schließventiles mit Strom beaufschlagbar ist, wobei parallel zur Spule mindestens ein bei Wegfall der Strombeaufschlagung der Spule zumindest ein Teil der in der Spule gespeicherten Energie aufnehmendes elektrisches Bauteil geschaltet ist.

Beim erfindungsgemäßen Staubsauger kommt mindestens ein Schließventil zum Einsatz, dessen Ventilkörper zwischen einer Schließstellung und einer Offenstellung hin- und herbewegbar ist. Unabhängig von seiner Stellung wird der Ventilkörper von einer Schließfeder mit einer Schließkraft in Richtung seiner Schließstellung beaufschlagt. In der Schließstellung wird der Schließkörper zusätzlich von einer magnetischen Haltekraft beaufschlagt, mit deren Hilfe sichergestellt ist, dass das geschlossene Schließventil die Strömungsverbindung zwischen dem Fremdlufteinlass und der dem Schmutzsammelbehälter abgewandten Seite des Filters zuverlässig verschließt. In dieser Stellung erfolgt der normale Saugbetrieb des Staubsaugers. Soll das mindestens eine Filter gereinigt werden, so wird mindestens ein Schließventil geöffnet. Erfindungsgemäß weist das Schließventil einen Elektromagneten auf, der zum Schließen des Schließventils mit Strom beaufschlagt werden kann. Zum Öffnen des Schließventils wird die Stromversorgung des Elektromagneten kurzzeitig unterbrochen, so dass die den Ventilkörper beaufschlagende Haltekraft schlagartig entfällt. Während des normalen Saugbetriebes unterliegt der Ventilkörper einer Druckdifferenz, da auf seiner dem Filter abgewandten Seite der Druck der Fremdluft, also üblicherweise Atmosphärendruck, herrscht, wohingegen auf seiner dem Filter zugewandten Seite der Unterdruck der Absaugleitung vorliegt. Diese Druckdifferenz hat bei Wegfall der magnetischen Haltekraft zur Folge, dass der Ventilkörper entgegen der Federkraft des Schließventiles in seine Offenstellung übergeht. Mit zunehmendem Abstand von dem Ventilsitz, der dem Ventilkörper zugeordnet ist, nimmt die Rückstellkraft der Schließfeder zu, so dass der Ventilkörper von der Schließfeder wieder in seine Schließstellung zurückgeführt wird. Das Öffnen des Schließventiles hat zur Folge, dass die dem Schmutzsammelbehälter abgewandte Seite des Filters kurzzeitig mit Fremdluft beaufschlagt wird. Dies führt zum einen zu einem Druckstoß, der das mindestens eine Filter mechanisch erschüttert, zum anderen wird das mindestens eine Filter in Gegenstromrichtung von Fremdluft durchströmt.

Um eine möglichst schlagartige Beaufschlagung des Filters mit Fremdluft zu erzielen, ist erfindungsgemäß vorgesehen, dass die magnetische Haltekraft nach möglichst kurzer Zeit entfällt. Deshalb ist parallel zur Spule mindestens ein bei Wegfall der Strombeaufschlagung der Spule zumindest einen Teil der in der Spule gespeicherten Energie aufnehmendes elektrisches Bauteil geschaltet. Die Spule bildet eine große Induktivität für den elektrischen Steuerkreis der Spule. Beim Unterbrechen der Stromzufuhr hat die Induktivität aufgrund einer Selbstinduktion eine hohe Gegenspannung zur Folge. Diese Gegenspannung wird über das mindestens eine, parallel zur Spule geschaltete elektrische Bauteil kurzgeschlossen, wobei dieses Bauteil zumindest einen Teil der in der Spule gespeicherten Energie aufnimmt. Dies ermöglicht es, das während des normalen Saugbetriebs herrschende Magnetfeld des Elektromagneten innerhalb sehr kurzer Zeit, vorzugsweise innerhalb von weniger als 20 Millisekunden, insbesondere innerhalb eines Zeitraumes von weniger als 10 Millisekunden, praktisch auf Null zurückzuführen. Die Energie des Magnetfelds wird beim Unterbrechen der Stromversorgung der Spule von dem mindestens einen parallel zur Spule geschalteten elektrischen Bauteil aufgenommen.

Der erfindungsgemäße Einsatz von mindestens einem parallel zur Spule geschalteten elektrischen Bauteil, das zumindest einen Teil der in der Spule gespeicherten Energie aufnimmt, ermöglicht es, dass die magnetische Haltekraft innerhalb sehr kurzer Zeit praktisch auf Null abfallen kann. Anschließend kann der Elektromagnet erneut mit Strom beaufschlagt werden, so dass der von der Schließfeder wieder in seine Schließstellung zurückgeführte Ventilkörper mittels der erneuten magnetischen Haltekraft dichtend am Ventilsitz gehalten werden kann.

Der erfindungsgemäße Einsatz von mindestens einem parallel zur Spule geschalteten elektrischen Bauteil, das beim Abschalten der Stromversorgung der Spule zumindest einen Teil der in dieser gespeicherten Energie aufnimmt, ermöglicht somit ein sehr kurzes Öffnen des Schließventils. Fremdluft kann somit schlagartig dem abzureinigenden Filter zugeführt werden und kann dann auch gleich wieder vom Saugaggregat, das fortlaufend mit dem Filter in Strömungsverbindung steht, abgeführt werden. Der Filterabreinigungsvorgang vollzieht sich somit in Bruchteilen einer Sekunde. Dies hat den Vorteil, dass sich während der Filterabreinigung kein vollständiger Druckausgleich zwischen dem im Schmutzsammelbehälter herrschenden Unterdruck und dem Atmosphärendruck einstellt. Vielmehr kann im Mündungsbereich eines an den Saugeinlass angeschlossenen Saugschlauches ein Unterdruck auch während der Filterabreinigung aufrechterhalten werden, so dass sich für den Benutzer trotz der Filterabreinigung ein quasi kontinuierlicher Saugbetrieb einstellt.

Günstig ist es, wenn parallel zur Spule eine Freilaufdiode und in Reihe zu dieser mindestens ein Energie aufnehmendes elektrisches Bauteil geschaltet sind.

Die Freilaufdiode stellt sicher, dass eine induzierte Gegenspannung an der Spule kurzgeschlossen wird. Die Freilaufdiode entnimmt jedoch beim Kurzschließen der Spule nur sehr wenig von der ursprünglich im Magnetfeld des Elektromagneten gespeicherten Energie. Es ist deshalb in Reihe zur Freilaufdiode mindestens ein Energie aufnehmendes elektrisches Bauteil geschaltet. Hierbei kann es sich beispielsweise um einen ohmschen Widerstand handeln oder auch um eine Transzorbdiode. Bei Wegfall der Strombeaufschlagung der Spule fällt zumindest ein Teil der induzierten Gegenspannung an dem Energie aufnehmenden elektrischen Bauteil ab. Es kann somit das während des normalen Saugbetriebs herrschende Magnetfeld des Elektromagneten innerhalb sehr kurzer Zeit abgebaut werden.

Bei einer bevorzugten Ausgestaltung sind parallel zur Spule eine Freilaufdiode und in Reihe zu dieser eine entgegengesetzt zur Freilaufdiode gepolte Zener-Diode geschaltet. Wie bereits erläutert, kann eine induzierte Gegenspannung über die Freilaufdiode kurzgeschlossen werden. Da diese nur wenig von der ursprünglich in der Spule gespeicherten Energie entnimmt, ist in Reihe zur Spule eine Zener-Diode entgegengesetzt gepolt geschaltet. Die Zener-Diode ist somit bezogen auf die durch Selbstinduktion erzeugte Gegenspannung der Spule in Sperrrichtung geschaltet, so dass an der Zener-Diode eine nicht unerhebliche Spannung abfällt beim Abschalten der Stromversorgung der Spule. Mittels der Zener-Diode kann das während des normalen Saugbetriebs herrschende Magneteld des Elektromagneten in besonders kurzer Zeit praktisch auf Null zurückgeführt werden. Somit bricht die magnetische Haltekraft, die bei strombeaufschlagter Spule den Ventilkörper in seiner Schließstellung hält, innerhalb sehr kurzer Zeit zusammen und der Ventilkörper kann vom zugeordneten Ventilsitz abheben.

Vorzugsweise weist die Zener-Diode eine Durchbruchspannung von mehr als 50 V auf. Dies hat den Vorteil, dass mittels der Zener-Diode innerhalb sehr kurzer Zeit der Induktionsstrom der Spule praktisch auf Null zurückgeführt werden kann. Die Durchbruchsspanung der Zener-Diode kann beispielsweise etwa 56 V betragen.

Bevorzugt sind die Spule und das mindestens eine parallel zur Spule geschaltete Bauteil, also beispielsweise die Freilauf-Diode und die entgegengesetzt zu dieser gepolte Zener-Diode, über eine elektrische Schalteinheit und eine Gleichrichtereinheit an eine Wechselspannungsquelle anschließbar. Die elektrische Schalteinheit ermöglicht es, die Filterabreinigung in Abhängigkeit vom Druckabfall am Filter und/oder zeitabhängig durchzuführen. Beispielsweise kann vorgesehen sein, dass stromaufwärts und stromabwärts des Filters jeweils ein Drucksensor angeordnet wird, und dass in Abhängigkeit von den mittels der Sensoren erfassten Drücken die Stromzuführung der Spule kurzzeitig unterbrochen wird, um eine Filterabreinigung durchzuführen. Alternativ kann in vorzugsweise gleichbleibenden zeitlichen Abständen eine Filterabreinigung erfolgen.

Der Elektromagnet weist üblicherweise einen Eisenkern auf, auf den die Spule aufgewickelt ist. Während des normalen Saugbetriebes kann es vorkommen, dass sich der Eisenkern statisch auflädt aufgrund von vorbeiströmenden Staubpartikel. Die statische Aufladung kann Werte annehmen, die eine Gefährdung darstellen insbesondere für die mit der Spule verbundene elektrische Schalteinheit. Dadurch kann die Steuerung des Elektromagneten beeinträchtigt werden. Bei einer bevorzugten Ausgestaltung des erfindungsgemäßen Staubsaugers ist deshalb der Eisenkern über eine Potentialausgleichsleitung mit einem extern vorgegebenen Bezugspotential verbunden. Bei dem Bezugspotential kann es sich um Erdpotential handeln oder auch um ein externes Gleich- oder Wechselspannungspotential. Über die Potentialausgleichsleitung kann das Potential des Eisenkerns mit dem externen Bezugspotential ausgeglichen werden. Dadurch wird eine die Steuerung des Elektromagneten beeinträchtigende statische Aufladung des Eisenkerns vermieden. Insbesondere eine sehr kurzzeitige Unterbrechung der Stromversorgung des Elektromagneten kann durch eine statische Aufladung des Eisenkerns beeinträchtigt werden.

Günstig ist es, wenn die Potentialausgleichsleitung den Eisenkern mit einem Netzspannungsversorgungsanschluss verbindet, wobei in die Potentialausgleichsleitung mindestens ein Ohm'scher Widerstand geschaltet ist. Der Ohm'sche Widerstand weist bevorzugt Widerstandswerte von mindestens 10 MΩ auf, insbesondere Widerstandswerte von circa 15 bis 25 MΩ.

Von besonderem Vorteil ist es, wenn in die Potentialausgleichsleitung in Reihe zueinander mindestens zwei Ohm'sche Widerstände mit unterschiedlichen Widerstandswerten geschaltet sind. So kann beispielsweise ein erster Ohm'scher Widerstand einen Widerstandswert von etwa 8 MΩ und ein zweiter Ohm'scher Widerstand kann einen Widerstandswert von circa 12 MΩ aufweisen. Der Einsatz unterschiedlicher Ohm'scher Widerstände hat den Vorteil, dass bei der Montage des Staubsaugers die Gefahr verringert wird, dass irrtümlich zwei niederohmige Widerstände verwendet werden. Die elektrische Sicherheit des Staubsaugers wird dadurch verbessert.

Mit Hilfe des erfindungsgemäß zum Einsatz kommenden Elektromagneten wird der bewegliche Ventilkörper zuverlässig in seiner Schließstellung gehalten. Um das Schließventil zu öffnen, wird die Stromversorgung des Elektromagneten kurzzeitig unterbrochen. Von Vorteil ist es, wenn der Elektromagnet an einer Ventilhalterung angeordnet ist, die den Ventilsitz ausbildet, und wenn der Ventilkörper ein dem Elektromagneten zugeordnetes magnetisierbares Element aufweist, das in der Schließstellung des Ventilkörpers mit dem Elektromagneten einen Magnetkreis ausbildet. Das magnetisierbare Element, beispielsweise eine eisenhaltige Platte, bündelt die Feldlinien des Elektromagneten im Ventilkörper, so dass dieser unter der Wirkung der magnetischen Haltekraft zuverlässig in seiner Schließstellung gehalten wird. Nimmt der Ventilkörper jedoch einen verhältnismäßig geringen Abstand von beispielsweise zwei Millimeter zum Ventilsitz ein, so ist der magnetische Kreis unterbrochen, da auch das magnetisierbare Element einen entsprechenden Abstand zum Elektromagneten einnimmt. Dies hat zur Folge, dass die vom Elektromagneten ausgeübte Haltekraft nur sehr kurzreichweitig ist. Bei einer Öffnungsbewegung erfährt der Ventilkörper somit nur im unmittelbaren Bereich des Ventilsitzes eine magnetische Haltekraft, bereits in einem Abstand von etwa 2 mm zwischen dem Elektromagneten und dem magnetisierbaren Element ist die Magnetkraft so gering, dass sie den Ventilkörper nicht in seine Schließstellung zurückführen kann. Zum Zurückführen des Ventilkörpers kommt vielmehr die Schließfeder zum Einsatz.

Wie bereits erläutert, kann mittels des mindestens einen parallel zur Spule geschalteten Bauteils, das zumindest einen Teil der in der Spule gespeicherten Energie aufnimmt, sichergestellt werden, dass die magnetische Haltekraft innerhalb sehr kurzer Zeit, beispielsweise innerhalb von zehn Millisekunden, entfällt, wenn die Stromzuführung des Elektromagneten unterbrochen wird. Damit kann eine kurzzeitige Öffnungsbewegung des Ventilkörpers erzielt werden, der in seiner Schließstellung vorzugsweise mit Hilfe des magnetisierbaren Elementes am Elektromagneten gehalten wird. Von Vorteil ist es, wenn das magnetisierbare Element in der Schließstellung des Ventilkörpers unter Ausbildung eines Luftspaltes an der Stirnseite des Elektromagneten anliegt. Es hat sich gezeigt, dass durch die Bereitstellung eines Luftspaltes zwischen dem magnetisierbaren Element und dem Elektromagneten der Einfluss einer Remanenz des magnetisierbaren Elementes auf die Öffnungsbewegung des Ventilkörpers besonders gering gehalten werden kann. Eine derartige Remanenz hätte zur Folge, dass trotz abfallender magnetischer Haltekraft der Spule der Ventilkörper aufgrund der erfolgten Magnetisierung des magnetisierbaren Elementes zunächst noch am Elektromagneten gehalten wird. Einer derartigen Remanenz kann beispielsweise durch eine spezielle Legierung des magnetisierbaren Elementes entgegengewirkt werden. Dies ist allerdings mit nicht unerheblichen Kosten verbunden. Statt des Einsatzes einer derartigen Legierung ist erfindungsgemäß ein Luftspalt zwischen dem magnetisierbaren Element und dem Elektromagneten vorgesehen. Es hat sich gezeigt, dass durch die Bereitstellung eines derartigen Luftspaltes eine sehr kurzzeitige Öffnungsbewegung des Ventilkörpers erzielt werden kann.

Vorzugsweise ist der Luftspalt schmäler als 1 mm. Er kann beispielsweise weniger als 0,7 mm betragen, insbesondere ca. 0,5 mm.

Eine besonders wirkungsvolle Filterabreinigung wird bei einer bevorzugten Ausgestaltung des erfindungsgemäßen Staubsaugers dadurch erzielt, dass die Stromversorgung der Spule mehrmals hintereinander in zeitlichen Abständen von weniger als 1 Sekunde für einen Zeitraum von maximal 0,2 Sekunden unterbrechbar ist. So kann beispielsweise vorgesehen sein, dass die Stromversorgung zwei, drei oder sogar viermal hintereinander in zeitlichen Abständen von ca. 0,5 Sekunden jeweils für etwa 100 Millisekunden unterbrechbar ist. Die mehrmalige kurzzeitige Stromunterbrechung hat zur Folge, dass der Ventilkörper mehrmals hintereinander eine schnelle Öffnungs- und Schließbewegung ausführt, so dass das mindestens eine abzureinigende Filter in kurzen zeitlichen Abständen mehrmals mit einem Druckstoß beaufschlagt und von Fremdluft durchströmt wird. Dies hat eine alternierende mechanische Belastung des mindestens einen Filters zur Folge, unter deren Wirkung der bzw. die Filter wirkungsvoll abgereinigt werden.

Vorzugsweise ist die Stromversorgung der Spule in zeitlichen Abständen von etwa 10 bis circa 30 Sekunden mehrmals hintereinander für weniger als 0,2 Sekunden unterbrechbar. So kann beispielsweise vorgesehen sein, dass die Stromversorgung der Spule in gleichbleibenden zeitlichen Abständen von beispielsweise 15 Sekunden kurzzeitig unterbrochen wird. Insbesondere kann der Strom dreimal hintereinander in Abständen von jeweils 0,5 Sekunden für circa 0,1 Sekunde unterbrochen werden.

Bei einer vorteilhaften Ausgestaltung ist dem Ventilkörper ein federndes Anschlagelement zugeordnet, das den Ventilkörper in einer zum Ventilsitz beabstandeten Stellung mit einer Rückstoßkraft beaufschlagt. Durch das federnde Anschlagelement kann auf konstruktiv einfache Weise eine sehr kurze Öffnungsbewegung des Ventilkörpers erzielt werden, wobei er ausgehend von seiner Schließstellung zunächst nur mit der Schließkraft der Schließfeder beaufschlagt wird. Erst wenn der Ventilkörper einen gewissen Abstand zum Ventilsitz einnimmt, kommt das federnde Anschlagelement zur Wirkung, das den Ventilkörper mit einer Rückstoßkraft beaufschlagt. Das federnde Anschlagelement nimmt die Bewegungsenergie des Ventilkörpers auf und beschleunigt ihn zurück in Richtung Ventilsitz. Mit Hilfe des federnden Anschlagelementes kann das Schließventil innerhalb sehr kurzer Zeit wieder verschlossen werden, insbesondere nach einer Zeit von weniger als 0,2 Sekunden. Der normale Saugbetrieb des Staubsaugers kann quasi kontinuierlich fortgesetzt werden und dennoch kann eine wirkungsvolle Filterabreinigung erzielt werden. Fremdluft tritt nur für einen sehr kurzen Zeitraum in den Schmutzsammelbehälter ein, so dass die Saugströmung im Bereich des Saugeinlasses des Schmutzsammelbehälters nicht merklich unterbrochen wird. Der Staubsauger zeichnet sich folglich durch einen konstruktiv einfachen Aufbau aus, wobei sämtliche vorhandenen Filter im Saugbetrieb gleichzeitig von Saugluft durchströmt werden können und wobei durch kurzzeitiges Öffnen des mindestens einen Schließventils die gesamte, dem Schmutzsammelbehälter abgewandte Seite des mindestens einen Filters mit Fremdluft beaufschlagt werden kann. Die Fremdluft wird dem Filter schlagartig zugeführt, wobei das mindestens eine Saugaggregat permanent mit dem Filter in Strömungsverbindung steht, also auch während der Zeit seiner Abreinigung.

Das federnde Anschlagelement kann in unterschiedlicher Form ausgestaltet sein. Vorzugsweise ist es als Anschlagfeder ausgebildet. Diese weist bei einer bevorzugten Ausgestaltung eine größere Federkonstante auf als die Schließfeder. Die Anschlagfeder ist somit härter als die Schließfeder, d. h. es ist eine höhere Kraft erforderlich, um die Anschlagfeder zusammenzudrücken als dies bei der Schließfeder der Fall ist. Die Anschlagfeder kann ebenso wie die Schließfeder eine lineare oder auch eine nicht-lineare Kennlinie aufweisen. Beispielsweise kann vorgesehen sein, dass die Anschlagfeder und/oder die Schließfeder mit zunehmendem Federweg härter werden.

Bei einer bevorzugten Ausgestaltung des erfindungsgemäßen Staubsaugers sind die Schließfeder und die Anschlagfeder als Schraubenfedern mit unterschiedlichen Durchmessern ausgestaltet, wobei eine der beiden Schraubenfedern die andere Schraubenfeder in Umfangsrichtung umgibt. Dies ermöglicht eine platzsparende Anordnung der Schließfeder und der Anschlagfeder und ermöglicht darüber hinaus eine einfache Montage.

Vorzugsweise umgibt die Schließfeder die Anschlagfeder in Umfangsrichtung. Dies hat den Vorteil, dass der Ventilkörper an einer verhältnismäßig großen Anlagefläche an der Schließfeder anliegt und von der Schließfeder in die Schließstellung zurückgeführt wird. Die Kippstabilität des Ventilkörpers wird dadurch verbessert.

Der kombinierte Einsatz eines Elektromagneten, in dessen Freilaufkreis mindestens ein Energie aufnehmendes Bauteil, zum Beispiel in Reihe zueinander eine

Freilauf-Diode und eine entgegengesetzt zu dieser gepolte Zener-Diode geschaltet sind, mit einer Schließfeder, die den Ventilkörper permanent mit einer Schließkraft beaufschlagt, und mit einem federnden Anschlagelement ist von besonderem Vorteil, denn dadurch kann der Ventilkörper in seiner Schließstellung zuverlässig dicht am Ventilsitz gehalten werden, und mittels einer sehr kurzzeitigen Stromunterbrechung kann sich der Ventilkörper aufgrund der auf ihn einwirkenden Druckdifferenz für einen Zeitraum von weniger als 0,2 Sekunden vom Ventilsitz abheben, so dass das Schließventil geöffnet wird. Im Abstand zum Ventilsitz trifft der Ventilkörper auf das federnde Anschlagelement, das den Ventilkörper mit einer Rückstoßkraft in Richtung auf den Ventilsitz beaufschlagt. Unter der Wirkung der Rückstoßkraft und der von der Schließfeder ausgeübten Schließkraft erreicht der Ventilkörper innerhalb sehr kurzer Zeit wieder den Ventilsitz. Die Schließfeder hat hierbei die Funktion, den Ventilkörper in den Bereich des Magnetfeldes des Elektromagneten zurückzuführen, so dass der Ventilkörper während des normalen Saugbetriebes von dem erneut mit Strom beaufschlagen Elektromagneten am Ventilsitz gehalten werden kann.

Der Staubsauger kann mehrere Filter aufweisen. Als besonders vorteilhaft hat es sich erwiesen, wenn der Staubsauger ein einziges Filter umfasst. Insbesondere kann vorgesehen sein, dass das Filter durch gleichzeitiges Öffnen aller Schließventile über seine gesamte Fläche mit Fremdluft beaufschlagbar ist.

Bei einer konstruktiv besonders einfachen Ausgestaltung des erfindungsgemäßen Staubsaugers weist dieser lediglich ein einziges Schließventil auf, das auf der dem einzigen Filter abgewandten Seite einer Strömungsdurchlässe aufweisenden Filterhalterung positioniert ist. Durch Öffnen des Schließventils wird das einzige Filter über seine gesamte Fläche mit Fremdluft beaufschlagt.

Die erfindungsgemäße Ausgestaltung des Staubsaugers ermöglicht es, während des normalen Saugbetriebes die dem Schmutzsammelbehälter abgewandte Seite des mindestens einen Filters kurzzeitig mit Fremdluft zu beaufschlagen und diese innerhalb kurzer Zeit mittels des Saugaggregat abzusaugen, das auch bei geöffnetem Schließventil mit dem Filter in Strömungsverbindung steht. Günstig ist es, wenn der Ventilkörper während der Abreinigung des Filters eine kontinuierliche Bewegung ausgehend von seiner Schließstellung über seine Offenstellung zurück in seine Schließstellung ausführt. Bei einer derartigen Ausgestaltung wird der Ventilkörper beim Öffnen des Schließventils zunächst stark in die dem Ventilsitz abgewandte Richtung beschleunigt und anschließend mit Hilfe der Schließfeder und vorzugsweise mit Hilfe des federnden Anschlagelementes stark abgebremst und in seiner Bewegungsrichtung umgekehrt, um dann wieder in Richtung auf den Ventilsitz beschleunigt zu werden. Die gesamte Bewegung des Ventilkörpers ausgehend von seiner Schließstellung über die Auffangstellung zurück in die Schließstellung kann in Bruchteilen einer Sekunde, insbesondere in einem Zeitraum von weniger als 200 Millisekunden erfolgen.

Bevorzugt ist das mindestens eine Filter mittels des zumindest einen Schließventils unter Aufrechterhaltung eines Unterdrucks im Mündungsbereich eines in den Saugeinlass einmündenden Saugschlauches mit Fremdluft beaufschlagbar. Wird das mindestens eine Schließventil geöffnet, so steigt der Druck auf der dem Schmutzsammelbehälter abgewandten Seite des Filters schlagartig an und wird dann wieder abgebaut. Der schlagartige Druckanstieg bewirkt eine wirkungsvolle Abreinigung des Filters, da der Druckanstieg jedoch von dem mindestens einen Saugaggregat gleich wieder abgebaut wird, führt er nicht zu einer vollständigen Unterbrechung des Unterdrucks im Mündungsbereich des in den Saugeinlass einmündenden Saugschlauches. Es kann vielmehr ein quasi kontinuierlicher Saugbetrieb aufrechterhalten werden.

Die nachfolgende Beschreibung einer bevorzugten Ausführungsform der Erfindung dient im Zusammenhang mit der Zeichnung der näheren Erläuterung. Es zeigen:
- Figur 1:: Eine schematische Schnittansicht eines erfindungsgemäßen Staubsaugers;
- Figur 2:: eine vergrößerte Darstellung von Detail A aus Figur 1 und
- Figur 3:: Ein Blockschaltbild einer Versorgungsschattung für einen Elektromagneten des Staubsaugers.

In der Zeichnung ist schematisch ein Staubsauger 10 dargestellt mit einem Unterteil, das einen Schmutzsammelbehälter 12 ausbildet, und mit einem Oberteil 14, das auf das Unterteil aufgesetzt ist und ein Saugaggregat 16 aufnimmt. Der Schmutzsammelbehälter 12 umfasst einen Saugeinlass 18, an den ein Saugschlauch 20 anschließbar ist. An dem in der Zeichnung zur Erzielung einer besseren Übersicht nicht dargestellten freien Ende des Saugschlauches 20 kann eine Saugdüse angeschlossen werden. Alternativ kann vorgesehen sein, dass der Saugschlauch 20 an ein Bearbeitungswerkzeug, beispielsweise ein Bohraggregat oder ein Fräsaggregat, angeschlossen wird, so dass Staub, der während des Betriebes des Bearbeitungswerkzeuges anfällt, abgesaugt werden kann.

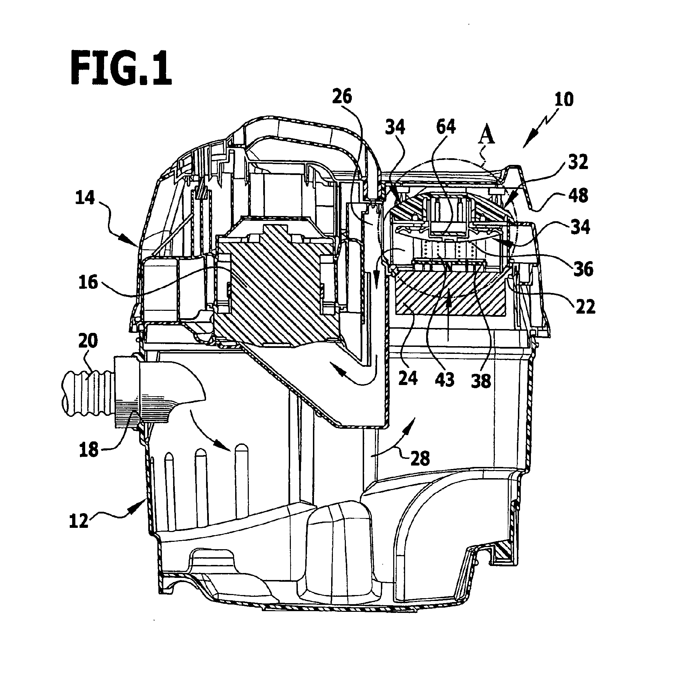

Das Oberteil 14 bildet einen Saugauslass 22 für den Schmutzsammelbehälter 12 aus. Am Saugauslass 22 ist ein Faltenfilter 24 gehalten, an das sich eine Absaugleitung in Form eines Saugkanals 26 anschließt. Über den Saugkanal 26 steht das Faltenfilter 24 permanent mit dem Saugaggregat 16 in Strömungsverbindung. Der Schmutzsammelbehälter 12 kann über den Saugkanal 26 und das Faltenfilter 24 vom Saugaggregat 16 mit Unterdruck beaufschlagt werden, so dass sich eine in Figur 1 durch die Pfeile 28 symbolisierte Saugströmung ausbildet, unter deren Wirkung Schmutz in den Schmutzsammelbehälter 12 eingesaugt werden kann. Mittels des Faltenfilters 24 können die Schmutzteilchen aus der Saugströmung 28 abgeschieden werden.

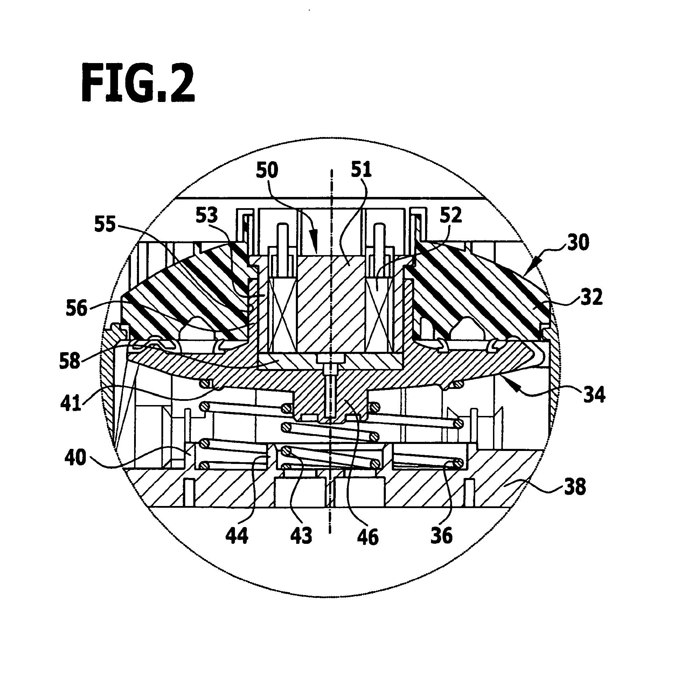

Oberhalb des Faltenfilters 24 ist im Oberteil 14 ein Schließventil 30 angeordnet, das in Figur 2 vergrößert dargestellt ist. Es umfasst eine ortsfest im Oberteil 14 angeordnete Ventilhalterung 32, die einen Ventilsitz ausbildet und mit einem Ventilkörper in Form eines kreisrunden Ventiltellers 34 zusammenwirkt. Der Ventilteller 34 ist mittels einer Schließfeder 36 mit einer Schließkraft in Richtung auf die Ventilhalterung 32 beaufschlagt. Die Schließfeder 36 weist eine lineare Kennlinie auf und ist zwischen einer plattenartigen, eine Vielzahl von Strömungsdurchlässen aufweisenden, ortsfest im Oberteil 14 angeordneten Filterhalterung 38 und dem Ventilteller 34 eingespannt. Die Filterhalterung 38 weist auf ihrer dem Schließventil 30 zugewandten Oberseite einen äußeren Ringkragen 40 auf, der den benachbarten Endbereich der als Schraubenfeder ausgebildeten Schließfeder 36 in Umfangsrichtung umgibt. Der Ventilteller 34 weist auf seiner der Filterhalterung 38 zugewandten Unterseite einen Ringwulst 41 auf, an dem die Schließfeder 36 außenseitig anliegt.

Zusätzlich zur Schließfeder 36 trägt die Filterhalterung 38 ein federndes Anschlagelement in Form einer Anschlagfeder 43, die ebenso wie die Schließfeder 36 als Schraubenfeder ausgebildet ist und eine lineare Kennlinie aufweist. Zur Halterung der Anschlagfeder 43 umfasst die Filterhalterung 38 auf ihrer dem Schließventil 30 zugewandten Oberseite einen konzentrisch zum äußeren Kragen 40 angeordneten inneren Ringkragen 44, in den die Anschlagfeder 43 mit einem Endabschnitt eintaucht. Fluchtend zum inneren Ringkragen 44 ist an den Ventilteller 34 unterseitig ein Führungszapfen 46 angeformt, der in der Figur 2 dargestellten Schließstellung des Ventiltellers 34 von einem Endbereich der Anschlagfeder 43 umgeben ist. Die Anschlagfeder 43 steht im Gegensatz zur Schließfeder in der Schließstellung des Ventiltellers nicht unter Vorspannung. Erst wenn sich der Ventilteller 34 vom Ventilsitz der Ventilhalterung 32 abhebt, gelangt die Anschlagfeder 43 an der Unterseite des Ventiltellers 34 zur Anlage und wird bei einer weiteren Bewegung des Ventiltellers 34 etwas zusammengedrückt.

Die Ventilhalterung 32 weist eine Vielzahl von in der Zeichnung nicht dargestellten Durchgangsöffnungen auf, die in den Ventilsitz einmünden, an dem der Ventilteller 34 dichtend anliegt, wenn er seine Schließstellung einnimmt. In Höhe der Ventilhalterung 32 weist das Oberteil 14 eine seitliche Öffnung 48 auf. Über die seitliche Öffnung 48 kann Fremdluft in die Durchgangsöffnungen der Ventilhalterung 32 einströmen. Nimmt der Ventilteller 34 eine zur Ventilhalterung 32 und damit auch zum Ventilsitz beabstandete Stellung ein, so steht die seitliche Öffnung 48 über die Durchgangsöffnungen der Ventilhalterung 32 mit dem Saugkanal 26 in Strömungsverbindung und Fremdluft kann die dem Schmutzsammelbehälter 12 abgewandte Seite des Filters 24 beaufschlagen. Nimmt der Ventilteller 34 seine Schließstellung ein, so ist die Strömungsverbindung zwischen dem Saugkanal 26 und der seitlichen Öffnung 48 unterbrochen.

In einem zentralen Bereich trägt die Ventilhalterung 32 eine Magnethalterung in Form eines Elektromagneten 50 mit einem Magnetkern 51, der von einer Magnetspule 52 umgeben ist. Den außenseitigen Abschluss des Elektromagneten 50 bildet ein zylinderförmiger Mantel 53, der ebenso wie der Magnetkern 51 aus einem magnetisierbaren Material gefertigt ist. Der Mantel 53 ist in Umfangsrichtung von einer Führungsaufnahme in Form eines Ringraumes 55 umgeben, in den eine oberseitig an den Ventilteller 34 angeformte Führungshülse 56 eintaucht. Der Ringraum 55 und die Führungshülse 56 bilden Führungselemente zur verschieblichen Lagerung des Ventiltellers 34 aus. Die Führungshülse 56 nimmt ein magnetisierbares Element in Form einer Eisenplatte 58 auf, die in der Schließstellung des Ventiltellers 34 an der freien Stirnseite des Elektromagneten 50 anliegt und in Kombination mit dem Magnetkern 51 und dem Mantel 53 einen geschlossenen Magnetkreis ausbildet. Der geschlossene Magnetkreis bündelt die Magnetfeldlinien des Elektromagneten 50.

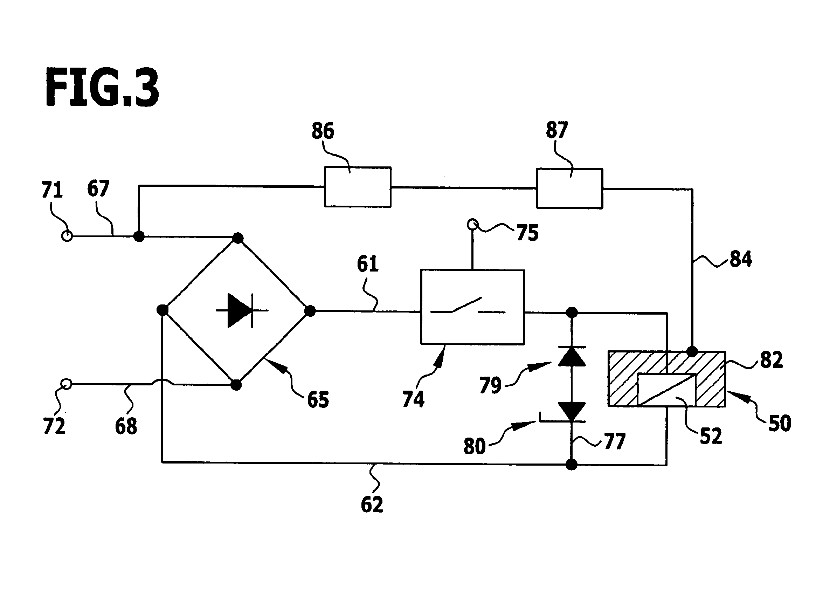

Die Stromversorgung des Elektromagneten 50 ist in Figur 3 schematisch dargestellt. Die Magnetspule 52 steht über eine erste Stromversorgungsleitung 61 und eine zweite Stromversorgungsleitung 62 mit einer Gleichrichtereinheit 65 in elektrischer Verbindung, die über eine erste Anschlussleitung 67 und eine zweite Anschlussleitung 68 an Netzanschlüsse 71 und 72 angeschlossen ist. An die Netzanschlüsse kann in üblicher Weise eine Wechselspannungsquelle angeschlossen werden.

In die erste Stromversorgungsleitung 61 ist eine elektrisch steuerbare Schalteinheit 74 geschaltet, mit deren Hilfe die Stromversorgung der Magnetspule 52 in Abhängigkeit von einem Steuersignal, das von einer in der Zeichnung nicht dargestellten Steuereinheit des Staubsaugers 10 über einen Steueranschluss 75 der Schalteinheit 74 bereitgestellt wird, unterbrochen werden kann. Parallel zur Magnetspule 52 sind in einer Freilaufleitung 77 in Reihe zueinander eine Freilauf-Diode 79 und eine Zener-Diode 80 geschaltet, wobei die Zener-Diode 80 entgegengesetzt zur Freilauf-Diode 79 gepolt ist.

Der Magnetkern 51 und der Mantel 53 des Elektromagneten 50 bilden ein Gehäuse des Elektromagneten 50 aus, das in Figur 3 mit dem Bezugszeichen 82 belegt ist. Es ist aus einem elektrisch leitfähigen Material, insbesondere aus einem Eisenmaterial gefertigt und steht über eine Potentialausgleichsleitung 84 mit der ersten Anschlussleitung 67 in elektrischer Verbindung. In die Potentialausgleichsleitung 84 sind in Reihe zueinander ein erster Ohm'scher Widerstand 86 und ein zweiter Ohm'scher Widerstand 87 geschaltet. Der Widerstandswert des ersten Ohm'schen Widerstandes beträgt beispielsweise etwa 8 MΩ, wohingegen der Widerstandswert des zweiten Ohm'schen Widerstandes beispielsweise 12 MΩ betragen kann.

Über die Gleichrichtereinheit 65 und die Schalteinheit 64 kann die Magnetspule 52 mit Strom beaufschlagt werden zur Ausbildung einer magnetischen Haltekraft, die den Ventilteller 34 in seiner Schließstellung hält. Mittels der Schalteinheit 74 kann die Stromzuführung kurzzeitig, beispielsweise für einen Zeitraum von etwa 100 Millisekunden, unterbrochen werden. Dies hat zur Folge, dass sich an der Magnetspule 52 durch Selbstinduktion eine der ursprünglichen Spannung entgegengesetzte Induktionsspannung ausbildet. Diese Induktionsspannung wird über die Freilauf-Diode 79 und die Zener-Diode 80 kurzgeschlossen, so dass der zugehörige Induktionsstrom der Magnetspule 52 innerhalb sehr kurzer Zeit, beispielsweise innerhalb von etwa 10 Millisekunden nach dem Abschalten der Stromzuführung praktisch vollständig abfällt, d. h. innerhalb von etwa 10 Millisekunden bricht das während des normalen Saugbetriebes herrschende Magnetfeld des Elektromagneten 50 vollständig zusammen. Die Zener-Diode 80 ist der Freilauf-Diode 79 entgegengerichtet und wird deshalb in Sperrrichtung betrieben, so dass an ihr die Durchbruchspannung, die in der dargestellten Ausführungsform etwa 56 V beträgt, abfällt. Dadurch kann der Magnetspule 52 innerhalb sehr kurzer Zeit eine beträchtliche Energie entnommen werden, so dass der induzierte Strom innerhalb des genannten Zeitraums von etwa 10 Millisekunden praktisch vollständig abfällt.

Schaltet der Benutzer den Staubsauger 10 ein, so wird das Saugaggregat 16 in Gang gesetzt und gleichzeitig wird die Magnetspule 52 über die Schalteinheit 74 und die Gleichrichtereinheit 65 mit Strom versorgt, so dass der Ventilteller 34 vom Elektromagneten 50 mit einer magnetischen Haltekraft beaufschlagt wird, die ihn zuverlässig in seiner Schließstellung hält. Das Saugaggregat 16 beaufschlagt den Schmutzsammelbehälter 12 und den Saugkanal 26 mit Unterdruck, so dass Schmutzpartikel ebenso wie Flüssigkeitströpfchen in den Schmutzsammelbehälter 12 eingesaugt werden können. Schmutzpartikel werden am Filter 24 abgeschieden, so dass sich dieses während des normalen Saugbetriebes allmählich zusetzt. In zeitlichen Abständen von beispielsweise 10 bis 30 Sekunden, insbesondere in zeitlichen Abständen von etwa 15 Sekunden, wird deshalb mittels der Schalteinheit 74 die Stromversorgung der Magnetspule 52 mehrfach kurzzeitig unterbrochen. Es kann beispielsweise vorgesehen sein, dass die Stromversorgung der Magnetspule 52 in Abständen von jeweils 0,5 Sekunden dreimal hintereinander für etwa 0,1 Sekunde unterbrochen wird, und dass dann für 15 Sekunden der normale Saugbetrieb wieder aufgenommen wird. Das Unterbrechen der Stromversorgung hat zur Folge, dass das Magnetfeld des Elektromagneten aufgrund des Einsatzes der Zener-Diode 80 innerhalb sehr kurzer Zeit, beispielsweise innerhalb von circa 10 Millisekunden, zusammenbricht und damit die magnetische Haltekraft für den Ventilteller 34 entfällt. Dies wiederum bewirkt, dass der Ventilteller 34 aufgrund der auf ihn einwirkenden Druckdifferenz, die sich aus dem Außendruck der im Bereich der Ventilhalterung 32 vorliegenden Fremdluft und dem Innendruck innerhalb des Saugkanals 26 ergibt, entgegen der Wirkung der Schließfeder 36 vom Ventilsitz abhebt. Fremdluft kann dann schlagartig durch die Durchgangsöffnung der Ventilhalterung hindurch in den Saugkanal 26 einströmen. Das Filter 24 wird somit auf seiner dem Schmutzsammelbehälter 12 abgewandten Seite schlagartig mit Fremdluft beaufschlagt. Dies führt zu einer mechanischen Erschütterung des Filters 24. Außerdem wird das Filter 24 in Gegenstromrichtung von der Fremdluft durchströmt. Dies hat insgesamt eine wirkungsvoll Abreinigung des Filters 24 zur Folge.

Der sich vom Ventilsitz abhebende Ventilteller 34 gelangt nach einer kurzen Hubbewegung mit seiner Unterseite an die Anschlagfeder 43, die den Ventilteller 34 mit einer Rückstoßkraft in Richtung auf die Ventilhalterung 32 beaufschlagt. Die Anschlagfeder 43 nimmt die Bewegungsenergie des Ventiltellers 34 auf. Letzterer wird von der Anschlagfeder 43 in Richtung auf den Ventilsitz beschleunigt. Nähert sich der Ventilteller 34 dem Ventilsitz, so gibt die Anschlagfeder 43 den Ventilteller 34 frei. Letzterer wird von der Schließfeder 36 bis zum Ventilsitz zurückgeführt, so dass die Eisenplatte 58 wieder an der Stirnseite des Elektromagneten 50 zur Anlage gelangt, wobei sich allerdings zwischen der Stirnseite des Elektromagneten 50 und der Eisenplatte 58 ein Luftspalt von circa 0,5 mm ausbildet. Erreicht die Eisenplatte 58 die Stirnseite des Elektromagneten 50, wird dieser wieder über die Schalteinheit 74 mit Strom beaufschlagt, so dass der Ventilteller 34 vom Elektromagneten 50 wieder dichtend am Ventilsitz gehalten wird. Die Unterbrechung der Stromzufuhr für den Elektromagneten 50 erfolgt lediglich für einen Zeitraum von etwa 100 Millisekunden, so dass das Schließventil 40 nur für einen sehr kurzen Zeitraum öffnet und Fremdluft zum Filter 24 gelangen kann. Anschließend wird der Elektromagnet 50 wieder mit Strom beaufschlagt und der normale Saugbetrieb kann fortgesetzt werden. Aufgrund der kurzen Öffnung des Schließventiles 30 wird auch während der Filterabreinigung im Mündungsbereich des in den Saugeinlass 18 einmündenden Saugschlauches 20 ein Unterdruck aufrechterhalten. Dies hat zur Folge, dass für den Benutzer ein quasi kontinuierlicher Saugbetrieb möglich ist und dennoch eine zuverlässige Filterabreinigung gewährleistet ist.

## Patentansprüche

1. Staubsauger mit einem Schmutzsammelbehälter (12), der einen Saugeinlass (18) aufweist und über mindestens ein Filter (24) und zumindest eine Absaugleitung mit mindestens einem Saugaggregat in Strömungsverbindung steht, und mit mindestens einem stromabwärts des mindestens einen Filters (24) in die Absaugleitung einmündenden Fremdlufteinlass, der mittels zumindest eines Schließventiles (30) verschließbar ist, wobei das mindestens eine Schließventil einen Ventilkörper (34) aufweist, der zwischen einer Schließstellung, in der er an einem Ventilsitz (32) anliegt, und einer Offenstellung, in der er zum Ventilsitz beabstandet ist, hin- und herbewegbar ist, wobei er permanent von einer Schießfeder (36) mit einer Schließkraft und in der Schließstellung zusätzlich von einer Magnethalterung mit einer magnetischen Haltekraft beaufschlagt ist, **dadurch gekennzeichnet, dass** die Magnethalterung einen Elektromagneten (50) umfasst mit einem Magnetkern (51) und einer Spule (52), die zum Schließen des Schließventils (30) mit Strom beaufschlagbar ist, wobei parallel zur Spule (52) mindestens ein bei Wegfall der Strombeaufschlagung der Spule (52) zumindest ein Teil der in der Spule (52) gespeicherten Energie aufnehmendes elektrisches Bauteil (79, 80) geschaltet ist.

2. Staubsauger nach Anspruch 1, **dadurch gekennzeichnet, dass** parallel zur Spule (52) eine Freilaufdiode (79) und in Reihe zu dieser mindestens ein Energie aufnehmendes elektrisches Bauteil (80) geschaltet sind.

3. Staubsauger nach Anspruch 1 oder 2, **dadurch gekennzeichnet, dass** parallel zur Spule (52) eine Freilaufdiode (79) und in Reihe zu dieser eine entgegengesetzt zur Freilaufdiode (79) gepolte Zener-Diode (80) geschaltet sind.

4. Staubsauger nach Anspruch 3, **dadurch gekennzeichnet, dass** die Zener-Diode (80) eine Durchbruchspannung von etwa 50 V aufweist.

5. Staubsauger nach einem der voranstehenden Ansprüche, **dadurch gekennzeichnet, dass** die Spule (52) und das mindestens eine parallel zur Spule (52) geschaltete Bauteil (79, 80) über eine elektrische Schalteinheit (74) und eine Gleichrichtereinheit (65) an eine Wechselspannungsquelle anschließbar sind.

6. Staubsauger nach einem der voranstehenden Ansprüche, **dadurch gekennzeichnet, dass** der Magnetkern (51) über eine Potentialausgleichsleitung (84) mit einem extern vorgegebenen Bezugspotential verbunden ist.

7. Staubsauger nach Anspruch 6, **dadurch gekennzeichnet, dass** die Potentialausgleichsleitung (84) den Magnetkern (51) mit einem Netzspannungsversorgungsanschluss (71) verbindet, wobei in die Potentialausgleichsleitung (84) mindestens ein Ohm'scher Widerstand (86, 87) geschaltet ist.

8. Staubsauger nach Anspruch 7, **dadurch gekennzeichnet, dass** in die Potentialausgleichsleitung (84) in Reihe zueinander zwei Ohm'sche Widerstände (86, 87) mit unterschiedlichen Widerstandswerten geschaltet sind.

9. Staubsauger nach einem der voranstehenden Ansprüche, **dadurch gekennzeichnet, dass** der Elektromagnet (50) an einer Ventilhalterung (32) angeordnet ist, die den Ventilsitz ausbildet, und dass der Ventilkörper (34) ein dem Elektromagnet (50) zugeordnetes magnetisierbares Element (58) aufweist, das in der Schließstellung des Ventilkörpers (34) mit dem Elektromagneten (50) einen Magnetkreis ausbildet.

10. Staubsauger nach Anspruch 9, **dadurch gekennzeichnet, daß** das magnetisierbare Element (58) in der Schließstellung des Ventilkörpers (34) unter Ausbildung eines Luftspaltes an der Stirnseite des Elektromagneten (50) anliegt.

11. Staubsauger nach Anspruch 10, **dadurch gekennzeichnet, dass** der Luftspalt schmäler als 1 mm ist.

12. Staubsauger nach einem der voranstehenden Ansprüche, **dadurch gekennzeichnet, dass** die Stromversorgung der Spule (52) mehrmals hintereinander in zeitlichen Abständen von weniger als einer Sekunde für einen Zeitraum von maximal 0,2 Sekunden unterbrechbar ist.

13. Staubsauger nach einem der voranstehenden Ansprüche, **dadurch gekennzeichnet, dass** die Stromversorgung der Spule (52) in zeitlichen Abständen von 10 bis 30 Sekunden mehrmals hintereinander für weniger als 0,2 Sekunden unterbrechbar ist.

14. Staubsauger nach einem der voranstehenden Ansprüche, **dadurch gekennzeichnet, dass** dem Ventilkörper (34 ein federndes Anschlagelement (43) zugeordnet ist, das den Ventilkörper (34) in einer zum Ventilsitz beabstandeten Stellung mit einer Rückstoßkraft beaufschlagt.

15. Staubsauger nach Anspruch 14, **dadurch gekennzeichnet, dass** das federnde Anschlagelement als Anschlagfeder (43) ausgestaltet ist.

16. Staubsauger nach Anspruch 15, **dadurch gekennzeichnet, dass** die Federkonstante der Anschlagfeder (43) größer ist als die Federkonstante der Schließfeder (36).

17. Staubsauger nach Anspruch 15 oder 16, **dadurch gekennzeichnet, dass** die Schließfeder (36) und die Anschlagfeder (43) als Schraubenfedern mit unterschiedlichen Durchmessern ausgestaltet sind, wobei eine der beiden Schraubenfedern die andere Schraubenfeder in Umfangsrichtung umgibt.

18. Staubsauger nach einem der voranstehenden Ansprüche, **dadurch gekennzeichnet, dass** der Staubsauger (10) ein einziges Filter (24) aufweist.

19. Staubsauger nach Anspruch 18, **dadurch gekennzeichnet, dass** das Filter (24) durch Öffnen des Schließventils (30) über seine gesamte Fläche mit Fremdluft beaufschlagbar ist.

20. Staubsauger nach einem der voranstehenden Ansprüche, **dadurch gekennzeichnet, dass** der Ventilkörper (34) ausgehend von seiner Schließstellung über seine Offenstellung kontinuierlich in seine Schließstellung zurück bewegbar ist.

21. Staubsauger nach einem der voranstehenden Ansprüche, **dadurch gekennzeichnet, dass** das mindestens eine Filter (24) mittels des mindestens einen Schließventils (30) unter Aufrechterhaltung eines Unterdrucks im Mündungsbereich eines in den Saugeinlass (18) einmündenden Saugschlauches (20) mit Fremdluft beaufschlagbar ist.

## Claims

1. Vacuum cleaner with a dirt collection tank (12) having a suction inlet (18) and being in flow connection with at least one suction unit via at least one filter (24) and at least one extraction line, and with at least one external air inlet opening into the extraction line downstream of the at least one filter (24) and being closable by means of at least one closing valve (30), the at least one closing valve having a valve member (34) movable back and forth between a closed position in which it abuts on a valve seat (32), and an open position in which it is spaced from the valve seat, the valve member being acted upon permanently by a closing spring (36) with a closing force and, in the closed position, in addition, by a magnetic holding device with a magnetic holding force, **characterized in that** the magnetic holding device comprises an electromagnet (50) with a magnetic core (51) and a coil (52) to which current can be applied for closing the closing valve (30), at least one electrical component (79, 80) being connected in parallel to the coil (52) and taking up at least some of the energy stored in the coil (52) when the application of current to the coil (52) is discontinued.

2. Vacuum cleaner in accordance with claim 1, **characterized in that** a freewheeling diode (79) and at least one electrical component (80) which takes up energy and is connected in series with the freewheeling diode (79) are connected in parallel to the coil (52).

3. Vacuum cleaner in accordance with claim 1 or 2, **characterized in that** a freewheeling diode (79) and a Zener diode (80) connected in series with the freewheeling diode (79) and poled oppositely to the freewheeling diode (79) are connected in parallel to the coil (52).

4. Vacuum cleaner in accordance with claim 3, **characterized in that** the Zener diode (80) has a breakdown voltage of approximately 50 V.

5. Vacuum cleaner in accordance with any one of the preceding claims, **characterized in that** the coil (52) and the at least one component (79, 80) connected in parallel to the coil (52) can be connected to a source of AC voltage via an electrical switching unit (74) and a rectifier unit (65).

6. Vacuum cleaner in accordance with any one of the preceding claims, **characterized in that** the magnetic core (51) is connected via a potential equalization line (84) to a reference potential predetermined externally.

7. Vacuum cleaner in accordance with claim 6, **characterized in that** the potential equalization line (84) connects the magnetic core (51) to a mains voltage supply connection (71), at least one ohmic resistor (86, 87) being connected into the potential equalization line (84).

8. Vacuum cleaner in accordance with claim 7, **characterized in that** two ohmic resistors (86, 87) with different resistance values are connected into the potential equalization line (84) in series with each other.

9. Vacuum cleaner in accordance with any one of the preceding claims, **characterized in that** the electromagnet (50) is arranged on a valve holding device (32) forming the valve seat, and **in that** the valve member (34) has a magnetizable element (58) associated with the electromagnet (50) and forming a magnetic circuit with the electromagnet (50) in the closed position of the valve member (34).

10. Vacuum cleaner in accordance with claim 9, **characterized in that** the magnetizable element (58) abuts on the end side of the electromagnet (50) in the closed position of the valve member (34), thereby forming an air gap.

11. Vacuum cleaner in accordance with claim 10, **characterized in that** the air gap is narrower than 1 mm.

12. Vacuum cleaner in accordance with any one of the preceding claims, **characterized in that** the supply of current to the coil (52) can be interrupted several times one after the other for a period of time of at the most 0.2 seconds at time intervals of less than one second.

13. Vacuum cleaner in accordance with any one of the preceding claims, **characterized in that** the supply of current to the coil (52) can be interrupted several times one after the other for less than 0.2 seconds at time intervals of 10 to 30 seconds.

14. Vacuum cleaner in accordance with any one of the preceding claims, **characterized in that** there is associated with the valve member (34) a resilient stop element (43) which acts on the valve member (34) with a repulsion force in a position spaced from the valve seat.

15. Vacuum cleaner in accordance with claim 14, **characterized in that** the resilient stop element is configured as a stop spring (43).

16. Vacuum cleaner in accordance with claim 15, **characterized in that** the spring constant of the stop spring (43) is greater than the spring constant of the closing spring (36).

17. Vacuum cleaner in accordance with claim 15 or 16, **characterized in that** the closing spring (36) and the stop spring (43) are configured as helical springs with different diameters, one of the two helical springs surrounding the other helical spring in circumferential direction.

18. Vacuum cleaner in accordance with any one of the preceding claims, **characterized in that** the vacuum cleaner (10) has a single filter (24).

19. Vacuum cleaner in accordance with claim 18, **characterized in that** the filter (24) can be acted upon with external air over its entire surface area by opening the closing valve (30).

20. Vacuum cleaner in accordance with any one of the preceding claims, **characterized in that** the valve member (34), starting from its closed position, is continuously movable via its open position back into its closed position.

21. Vacuum cleaner in accordance with any one of the preceding claims, **characterized in that** the at least one filter (24) can be acted upon with external air by means of the at least one closing valve (30) while a negative pressure is maintained in the opening area of a suction hose (20) opening into the suction inlet (18).

## Revendications

1. Aspirateur muni d'un récipient collecteur de saletés (12), qui comporte une entrée d'aspiration (18) et est en relation d'écoulement avec au moins un groupe d'aspiration via au moins un filtre (24) et au moins une conduite d'aspiration, et muni d'au moins une entrée d'air extérieur débouchant dans la conduite d'aspiration en aval du ou des filtres (24), laquelle entrée d'air extérieur peut être fermée au moyen d'au moins une soupape de fermeture (30), la ou les soupapes de fermeture comportant un corps de soupape (34) capable d'effectuer des mouvements de va-et-vient entre une position fermée dans laquelle il repose contre un siège de soupape (32) et une position ouverte dans laquelle il est espacé du siège de soupape, le corps de soupape étant soumis en permanence à une force de fermeture exercée par un ressort de fermeture (36), à laquelle s'ajoute, dans la position fermée, une force de retenue magnétique exercée par un organe de retenue magnétique, **caractérisé en ce que** l'organe de retenue magnétique comprend un électroaimant (50) doté d'un noyau magnétique (51) et d'une bobine (52) pouvant être alimentée en courant pour fermer la soupape de fermeture (30), au moins un composant électrique (79, 80), qui absorbe au moins une partie de l'énergie accumulée dans la bobine (52) en cas de suppression de l'alimentation en courant de la bobine (52), étant connecté en parallèle à la bobine (52).

2. Aspirateur selon la revendication 1, **caractérisé en ce qu'**une diode de roue libre (79) et au moins un composant électrique (80) absorbant l'énergie connectée en série par rapport à ladite diode sont connectées en parallèle à la bobine (52).

3. Aspirateur selon la revendication 1 ou 2, **caractérisé en ce qu'**une diode de roue libre (79) et une diode Zener (80) polarisée à l'opposé de la diode de roue libre (79) est connectée en série par rapport à ladite diode de roue libre sont connectées en parallèle à la bobine (52).

4. Aspirateur selon la revendication 3, **caractérisé en ce que** la diode Zener (80) présente une tension de rupture de sensiblement 50 V.

5. Aspirateur selon l'une quelconque des revendications précédentes, **caractérisé en ce que** la bobine (52) et le ou les composants (79, 80) connectés en parallèle à la bobine (52) peuvent être raccordés à une source de tension alternative via une unité de commutation électrique (74) et une unité redresseuse (65).

6. Aspirateur selon l'une quelconque des revendications précédentes, **caractérisé en ce que** le noyau magnétique (51) est relié via une conduite de liaison équipotentielle (84) à un potentiel de référence prédéterminé de l'extérieur.

7. Aspirateur selon la revendication 6, **caractérisé en ce que** la conduite de liaison équipotentielle (84) relie le noyau magnétique (51) à un raccord d'alimentation en tension de secteur (71), au moins une résistance ohmique (86, 87) étant connectée dans la conduite de liaison équipotentielle (84).

8. Aspirateur selon la revendication 7, **caractérisé en ce que** deux résistances ohmiques (86, 87) présentant différentes valeurs de résistance sont connectées en série l'une par rapport à l'autre dans la conduite de liaison équipotentielle (84).

9. Aspirateur selon l'une quelconque des revendications précédentes, **caractérisé en ce que** l'électroaimant (50) est disposé sur un support de soupape (32) qui forme le siège de soupape, et **en ce que** le corps de soupape (34) comprend un élément magnétisable (58) associé à l'électroaimant (50), lequel élément forme avec l'électroaimant (50), dans la position fermée du corps de soupape (34), un circuit magnétique.

10. Aspirateur selon la revendication 9, **caractérisé en ce que** l'élément magnétisable (58) repose dans la position fermée du corps de soupape (34) contre la face avant de l'électroaimant (50), avec formation d'un entrefer.

11. Aspirateur selon la revendication 10, **caractérisé en ce que** la largeur de l'entrefer mesure moins de 1 mm.

12. Aspirateur selon l'une quelconque des revendications précédentes, **caractérisé en ce que** l'alimentation en courant de la bobine (52) peut être interrompue à plusieurs reprises successivement par intervalles inférieurs à une seconde pour un laps de temps de 0,2 seconde maximum.

13. Aspirateur selon l'une quelconque des revendications précédentes, **caractérisé en ce que** l'alimentation en courant de la bobine (52) peut être interrompue par intervalles de 10 à 30 secondes à plusieurs reprises successivement pendant moins de 0,2 seconde.

14. Aspirateur selon l'une quelconque des revendications précédentes, **caractérisé en ce qu'**un élément de butée élastique (43), soumettant le corps de soupape (34) dans une position espacée du siège de soupape à l'effet d'une force de rappel, est associé au corps de soupape (34).

15. Aspirateur selon la revendication 14, **caractérisé en ce que** l'élément de butée élastique est configuré comme un ressort de butée (43).

16. Aspirateur selon la revendication 15, **caractérisé en ce que** la constante de rappel du ressort de butée (43) est supérieure à la constante de rappel du ressort de fermeture (36).

17. Aspirateur selon la revendication 15 ou 16, **caractérisé en ce que** le ressort de fermeture (36) et le ressort de butée (43) sont configurés comme des ressorts hélicoïdaux présentant différents diamètres, l'un des deux ressorts hélicoïdaux entourant les autres ressorts hélicoïdaux dans la direction circonférentielle.

18. Aspirateur selon l'une quelconque des revendications précédentes, **caractérisé en ce que** l'aspirateur (10) comprend un seul filtre (24).

19. Aspirateur selon la revendication 18, **caractérisé en ce que** le filtre (24) peut être exposé à de l'air extérieur sur l'ensemble de sa surface du fait de l'ouverture de la soupape de fermeture (30).

20. Aspirateur selon l'une quelconque des revendications précédentes, **caractérisé en ce que** le corps de soupape (34) peut être ramené en permanence de sa position de fermeture à sa position de fermeture en passant par sa position d'ouverture.

21. Aspirateur selon l'une quelconque des revendications précédentes, **caractérisé en ce que** le ou les filtres (24) peuvent être exposés à de l'air extérieur au moyen de la ou des soupapes de fermeture (30) avec conservation d'une dépression dans la zone d'embouchure d'un tuyau d'aspiration (20) débouchant dans l'entrée d'aspiration (18).
